# EUROPEAN PATENT SPECIFICATION

(11) **EP 2 242 690 B1**
(45) Date of publication and mention of the grant of the patent: **21.08.2013**
(21) Application number: 08867932.9
(22) Date of filing: 18.12.2008
(51) Int. Cl.: B64F 1/305

(54) **OSCULATING DEVICE FOR BOARDING BRIDGE CANOPY**
ANSCHMIEGUNGSVORRICHTUNG FÜR FLUGGASBRÜCKENABDECKUNG
DISPOSITIF OSCULATEUR DESTINÉ À UNE PASSERELLE D'EMBARQUEMENT

(30) Priority: 28.12.2007 KR 20070140033
(43) Date of publication of application: 27.10.2010
(73) Proprietor: Otis Elevator Company, Farmington, CT 06032-2568 (US)
(72) Inventor: KIM, Ju Ryong, Seoul 134-797 (KR); LEE, Jong Hoon, Seoul (KR)
(74) Representative: Wohlfrom, Karl-Heinz
(86) International application number: PCT/US2008/087407
(87) International publication number: WO 2009/085940

(56) References cited:
- FR-A- 2 407 089
- JP-A- 10 250 695
- JP-A- 11 059 598
- US-A- 3 816 867
- US-A- 4 020 607
- US-A- 4 322 923

## Description

### Technical Field

The present invention pertains to an osculating device for a boarding bridge canopy.

More specifically the present invention pertains to an osculating device for a passenger boarding bridge canopy that avoids the formation of a gap between the canopy and the airplane by osculating the entrance side of the airplane and that can reduce the discomfort to passengers that may occur due to wind or rainwater blowing through the above-mentioned gap when they move through the mobile boarding bridge to or from the airplane.

### Description of the Related Art

In general, the mobile boarding bridge is a passageway that directly connects the airport gate to the airplane and that can move and turn so that it can be accommodated to the size and shape of the airplane.

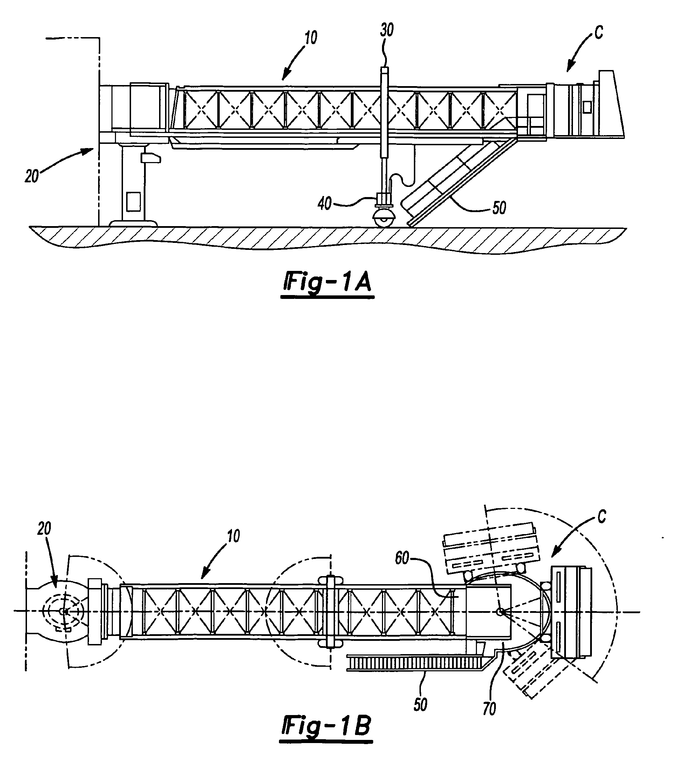

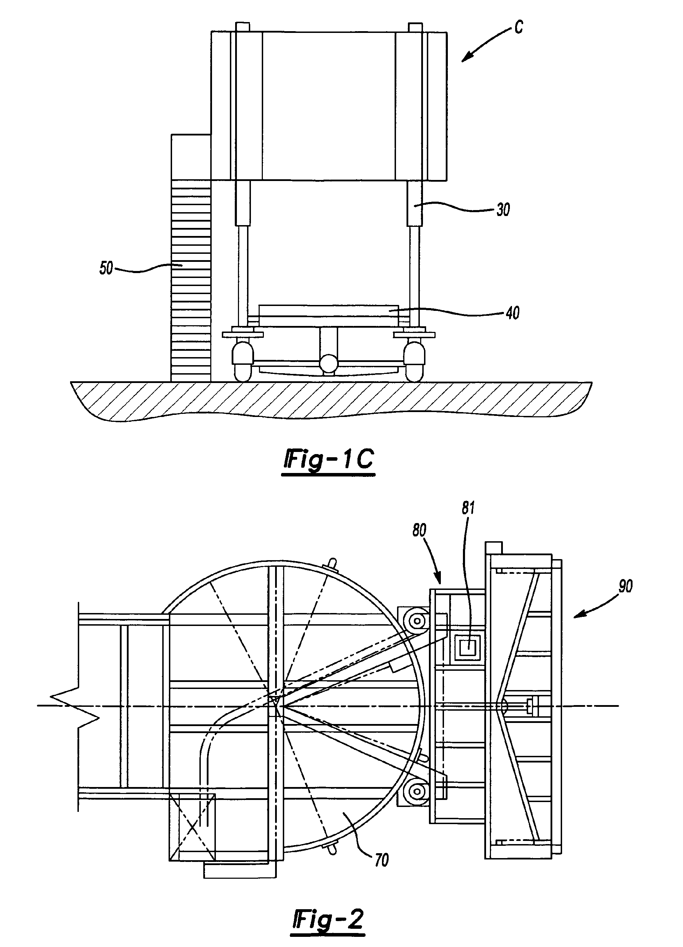

As shown in Figures 1a, 1b, and 1c, the above-mentioned mobile boarding bridge includes an adjustable-length tunnel (10) or passageway through which people move of prescribed length; a rotunda (20) that is installed at one end of the above-mentioned tunnel (10) that acts as a rotational shaft so that it can pivot about the end of the tunnel (10) in accordance with various positions of the airplane; a lift column (30) that vertically moves the above-mentioned tunnel (10) in accordance with the size of the airplane; a cabin part (C), which is installed at the other end of the above-mentioned tunnel (10) opposite the above-mentioned rotunda (20), that can turn toward the entrance of the stopped airplane; a driving means (40) that is installed on the above-mentioned lift column (30) for generating a driving force for the movement of each part; and service stairs (50) that enable the crew to board the airplane.

As shown in Figures 2a and 2b, the above-mentioned cabin part (C) includes a cabin rotation part (60) that rotates the cabin part so that it can be accommodated to the entrance of the airplane; a ronda (70) that acts as the rotational center of the above-mentioned cabin rotation part (60); a cabin (80) in which an operator seat and operating panel (81) are installed; and a canopy (90) at the end of the above-mentioned cabin (80) that is in continuous osculation with the entrance part of the airplane.

The operation of the above-mentioned mobile boarding bridge will be explained as follows.

When an airplane lands and is parked at an airport gate, the tunnel (10) is contracted/expanded by the drive of the driving means (40) and positioned at the airplane entrance, the cabin part (C) is adjusted to the height of the airplane entrance by vertically moving the tunnel (10) with the lift column (30). The entrance of the airplane and the entrance of the canopy (90) constituting the cabin part (C) are then adjusted by the rotation of the cabin rotation part (60) about the ronda of the cabin part (C), so that passengers can move to the airport through the cabin part (C) and the tunnel (10).

Thus, the mobile boarding bridge is a moving passageway that can be applied to airplanes of various sizes and shapes and is adjusted in accordance with each situation by contraction, expansion, and rotation.

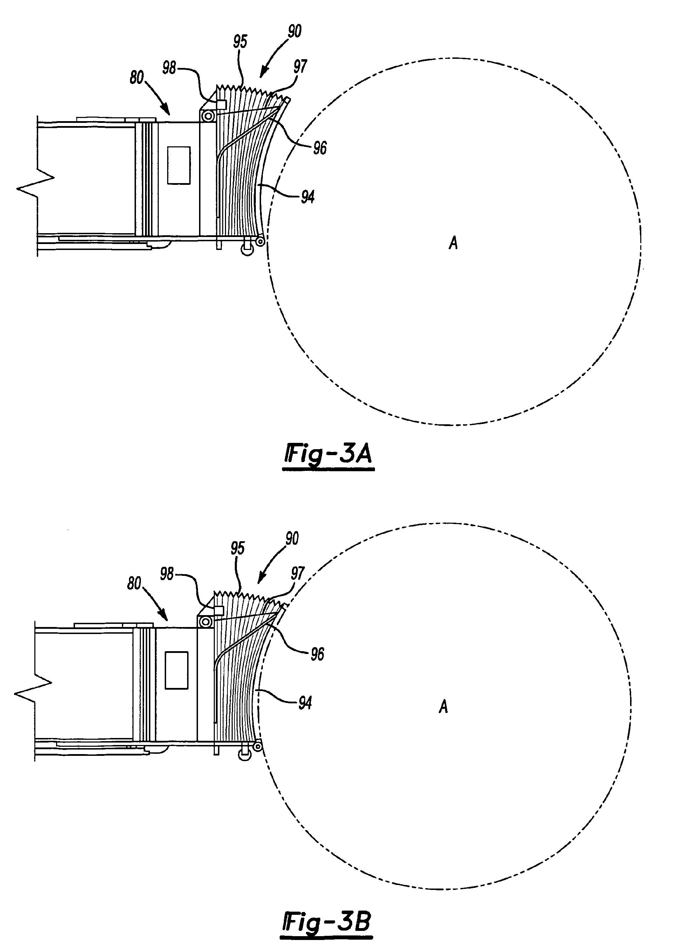

The canopy (C) which osculates the entrance of the above-mentioned airplane (A) so that it is in contact with it as shown in Figures 3a and 3b, includes a bumper (94) that makes contact with the entrance of the airplane (A), a cover (95) that not only can be contracted/expanded by being extended and coupled to the above-mentioned bumper (94) but also encloses the passageway along with a canopy bottom plate, a pneumatic device (96) that is installed on the above-mentioned bumper (94) and cover (95) and expands and contracts, a rope (97) that is connected to the above-mentioned pneumatic device (96), and a drive motor (98) that pays out and winds the above-mentioned rope (97).

The operation for osculating the above-mentioned canopy (C) to the airplane is done manually by operating the operating panel and is described below.

First, the tunnel is moved as close as possible to the airplane (A) by contraction/expansion, and left/right and up/down rotation, and the tunnel (10) is moved so that the lower end of the bumper (94) of the canopy is closely attached to the airplane (A). Then, the pneumatic device (96) is expanded/contracted by winding or paying out the rope (97) through the operation of the drive motor (98), so that the upper end of the bumper (94) is driven, thereby closely attaching the bumper (94) and the cover (95) to the airplane.

When the bumper and the cover are to be separated from the airplane (A), the rope (97) is wound by rotating the drive motor (98), and the pneumatic device (96) is contracted by winding the above-mentioned rope (97), so that the bumper (94) and the cover (95) are driven, thereby separating them from the airplane body.

However, in the above-mentioned conventional boarding bridge canopy, since the bumper (94) that osculates the entrance of the airplane is formed with a fixed curved surface whose size depends on each type of airplane with its particular streamlined external shape, the bumper (94) and the outer surface of the airplane body will not be in complete, close osculation when the bumper (94) of the canopy makes contact with the airplane.

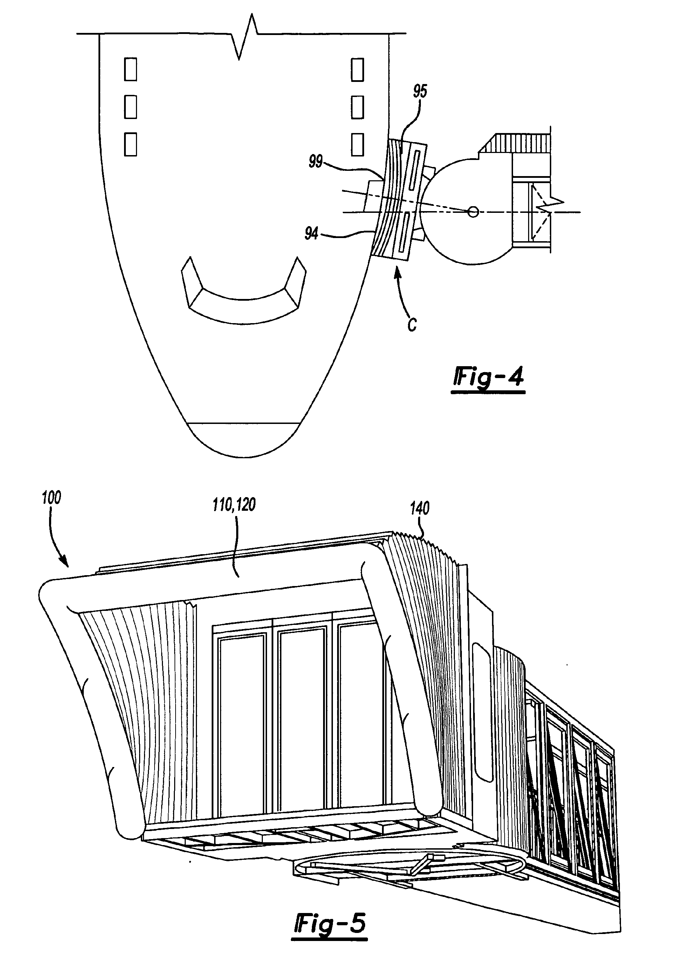

In other words, as shown in Figure 4, a gap (99) forms between the bumper (94) and the airplane body, so that passengers moving from the interior of the airplane to the boarding bridge experience a rapid change in temperature due to the outside air at the airport, or rainwater or wind, depending upon the weather at the airport, enters through the above-mentioned gap (99) so that the passengers become uncomfortable and feel uneasy. This invention was proposed to solve this problem.

In order to solve the above-mentioned problem, an apparatus for preventing rainwater from flowing into the canopy and its control method (Korean Laid-Open Patent No. 10-2000-0010365) have been proposed. That proposal solves the above-mentioned problem in which the outer surface of the airplane is not in complete, close osculation and a gap appears between the bumper and the airplane body because the bumper of the boarding bridge canopy that is in contact with the airplane entrance is formed with a fixed curved surface whose size depends on each type of airplane with its particular streamlined external shape. By using a method in which an air tube is mounted in the bumper of the canopy and air is injected into the above-mentioned air tube, rainwater can be prevented from entering the canopy when it is raining, so that passengers passing through the canopy do not get wet.

However, the air in the air tube of that proposed solution can leak out when the tube becomes scratched, etc., or air cannot be injected into the air tube for some reason. Thus, the above-mentioned air tube will be useless, so that the gap (99) of the conventional problem will still appear when the canopy is attached to the airplane. As a result, when the canopy is attached to the airplane, the problem of wind impact and the penetration of rainwater, etc., cannot be solved.
JP 10 250 695 A discloses a canopy for a boarding bridge to be used for airplanes of different dimensions and to reduce clearances formed between exit peripheral parts of a plane body by bringing the tip face of a cushion member in contact with an exit peripheral part of the plane body outer surface and providing a portal frame air bag so as to be matched with the curved shape of the peripheral part. It is so set that an air sufficient for bringing an air bag in contact with the outer surface of a plane body by an outer abutment force from a cushion member side and deforming it is fed thereto in being used. As the outer surface of the airplane is formed into a curved surface it is preferable that each side bag part and a top bag part are formed into recessed curved shapes to some extent respectively in a state without being fed the air therein.
JP 11 059 598 A shows a boarding device for aircraft capable of securing the excellent close-tightness performance between a bellows end and an airplane body even when the elasticity of a sponge rubber itself is lost. In a boarding device, a rubber tube in which the air of the prescribed pressure is enclosed, is built at least in a vertically extending sponge rubber part which is arranged on each side of the width direction of the bellows out of the sponge rubbers to constitute a cushioning material mounted on the opening of a tip part of a bellows along the sponge rubber part, the structure in which the restoration force of the sponge rubber is supported by the rubber tube is adopted so that the sponge rubber is returned to the original shape by the pressure of the air enclosed in the rubber tube, i.e., the restoration force to return the rubber tube to the original, in addition to the elastic force of the sponge rubber itself.

### SUMMARY

An exemplary osculating device for a boarding bridge canopy is equipped with an air charge part at the end of the canopy, which osculates the entrance of an airplane, and a buffer material provided in the above-mentioned air charge part, so that the generation of a gap between the canopy and the airplane body is prevented by the air charge part and buffer material during osculation, so that passengers are not affected by the weather at the airport, even if the air in the air charge part leaks for some unexpected reason.

One example osculating device for a mobile boarding bridge includes an air charge part that is attached to the end of the canopy of a mobile boarding bridge and that can inject air. A buffer material is provided in the air charge part that can maintain a fixed shape, even if the air is discharged from the air charge part. The air charge part has the shape of a circular section so that the inner surface of the air charge part encloses the outer surfaces of the buffer material, or the air charge part has an annular shape so that the inside annular surface of the air charge part encloses the outer surface of the buffer material. The above-mentioned buffer material can be constituted from a sponge, an air cap or both.

According to the present invention, when the osculating device equipped with the air charge part osculates an airplane, it can be closely attached to the body of the airplane, so as to provide stability to passengers boarding or leaving the airplane, without reducing the sealing effect, even by a slight air leak.

Also, since the buffer material is positioned in the air tube, the air charge and discharge times can be shortened, and since a small amount of air is injected, compared with the conventional case in which only an air tube is used, the cost can be reduced by using an air pump with a small motor. Even if the air in the air tube leaks out due to damage to the air tube, the osculating device can be continuously used due to the buffer material in the air tube, regardless of the damage to the air tube.

The various features and advantages of this invention will become apparent to those skilled in the art from the following detailed description. The drawings that accompany the detailed description can be briefly described as follows.

### BRIEF DESCRIPTION OF THE DRAWINGS

Figure 1a-1c are a front view, a plan view, and side view of the a mobile boarding bridge.

Figure 2 is a bottom view showing the cabin part of the mobile boarding bridge.

Figures 3a and 3b are front views before and after the expansion of the canopy.

Figure 4 is a plan view of an osculating device of the prior art.

Figure 5 is an oblique view of the osculating device for a boarding bridge canopy in an application example of the present invention.

Figure 6 is a schematic diagram showing the state in which the osculating device for a boarding bridge canopy in an application example of the present invention is osculated with an airplane.

Figures 7a-7c are cross sections showing the osculating device for a boarding bridge canopy in an application example of the present invention.

### DETAILED DESCRIPTION

As shown in the figures, the cabin part of a boarding bridge includes a canopy (140), and an osculating device (100) is provided at the end of the above-mentioned canopy (140). The above-mentioned osculating device (100) is connected to a bumper provided at the end of the canopy (140) or it can be directly connected to the end of the canopy (140) without a bumper.

The above-mentioned osculating device (100) is constituted to enclose the end of the canopy (140) and includes an air charge part (110) for connecting the upper surface of the canopy (140) and both of its sides and a buffer material (120) that is positioned in the above-mentioned air charge part (110) for preventing air from being introduced into the air charge part (110) or maintaining a fixed volume in the above-mentioned osculating device (100), even if a slight air leak from the above-mentioned air charge part (110) occurs.

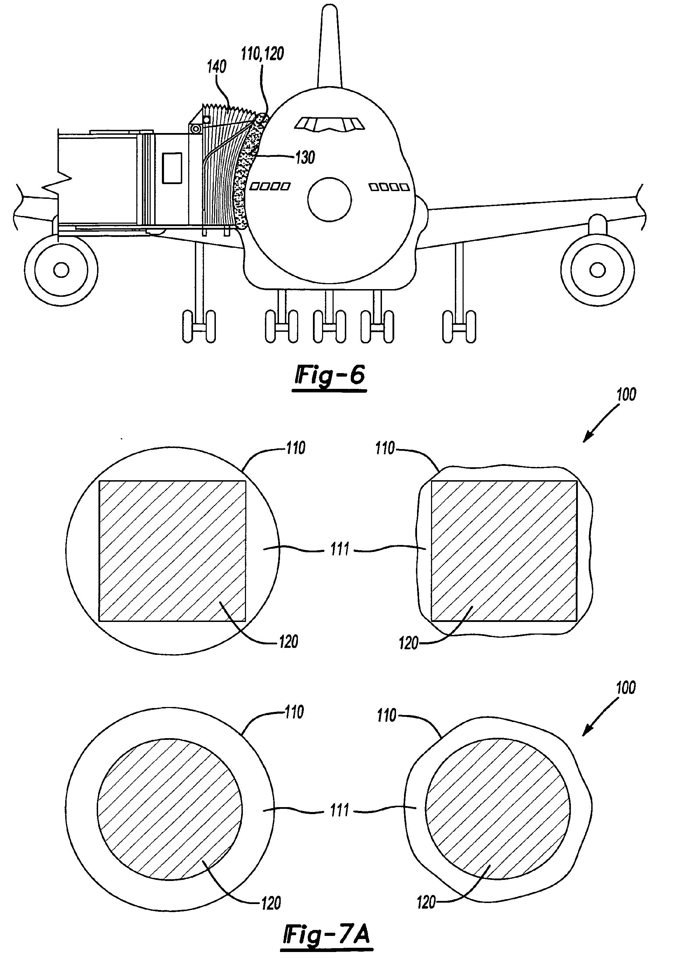

In addition to the general shape of the airplane which is approximately that of a circular section, the shape of a large airplane, like the two-story airplane shown in Figure 6, may include a fixed curved part (130) that is sometimes provided on the side surface.

For an airplane with a general shape, the shape of the end of the canopy (140) is sometimes the same as that of the part that is directly osculated with the airplane; however, since the shape of the part of the airplane to be osculated varies, a gap will sometimes appear between the canopy (140) and the airplane in the conventional case when a bumper is used.

Furthermore, for a large airplane, there is a fixed curved part (130) on the part of the side surface that is to be osculated with the canopy (140), and if the canopy (140) is osculated with the above-mentioned curved part (130), a gap will inevitably appear between the canopy (140) and the airplane.

In particular, airplane manufacturers have tended to focus on large-scale airplanes rather than small-scale airplanes and have even developed technologies for manufacturing jumbo-sized airplanes. Therefore, the problem of the generation of a gap between an airplane with the above-mentioned curved part (130) and the canopy (140) cannot be solved by the conventional boarding bridge, that is, the boarding bridge equipped with only a bumper in the canopy (140).

In order for passengers to be able to safely board and leave an airplane with the above-mentioned gap sealed, the conventional bumper is not appropriate, so that in the present invention, the air charge part (110) is provided at the end of the canopy (140), so that if the canopy is osculated with the airplane in a state in which the above-mentioned air charge part (110) is charged, the gap can be eliminated, regardless of the shape of the airplane entrance. In other words, if the air charge part (110) has a shape that closes the end constituting the canopy (140), the above-mentioned air charge part (110) can seal the gap between the airplane and both sides and the upper surface of the canopy (140) through which passengers pass, so that the passengers can move safely and comfortably between the airplane and the boarding bridge without being affected by the wind outside the airplane and other weather conditions.

If air is unexpectedly charged into the air charge part (110) or if the air charged into the air charge part (110) leaks out due to scratches, etc., from the air charge part (110) after osculation, not only will an impact likely occur to the airplane or canopy (140) due to the contact of the airplane and the canopy (140), but the passengers passing through the osculating part of the airplane and the boarding bridge will experience a rapid temperature change due to the temperature difference between the outside environment and the airplane interior, so that the passengers will feel uncomfortable and uneasy.

Therefore, even if air is not charged into the above-mentioned air charge part (110) or if the air charged into the above-mentioned air charge part (110) leaks out, the osculating device (100) must maintain at least a fixed volume. For this purpose, the buffer material (120) is provided in the above-mentioned air charge part (110).

Figures 7a-7c are respectively cross sections showing an air charge state and an air discharge state of the osculating devices (100) in various application examples of the present invention.

As shown in Figure 7a, the air charge part (110) can have a tubular shape, that is, a cylindrical shape, and the buffer material (120) can be provided with the above-mentioned tubular shape.

If the osculating device (100) is provided with the above-mentioned shape, even if a small amount of air leaks from the air charge part (110) by the buffer material (120) with a rectangular or circular shape that is provided in the inside (111) of the above-mentioned air charge part, the entire volume of the air charge part (110) is not reduced by the shape of the buffer material (120) itself, and at least the volume of the above-mentioned buffer material (120) is maintained.

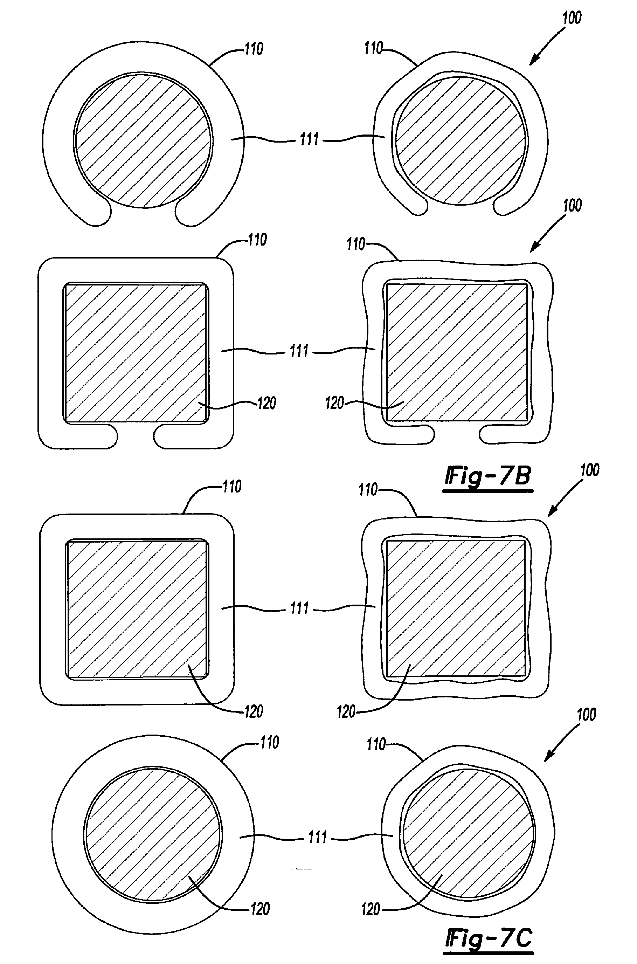

As shown in Figure 7b, the air charge part (110) has a shape that encloses only part of the outside surface of the buffer material (120), that is, a sectional shape like a crescent, and the buffer material (120) can be provided in contact with the inside surface of the above-mentioned crescent shape. If the above-mentioned osculating device (100) is constituted so that the end of the canopy (140) or the end of a bumper provided to the end of the canopy (140) is to be osculated, then the above-mentioned constitution can be adopted.

If the osculating device (100) is provided with the crescent shape as the sectional shape of the air charge part (110) mentioned above, even if the air in the air charge part (111) leaks out slightly, the entire volume of the air charge part (110) is not reduced by the shape of the buffer material (120) itself, such as the rectangular or circular shape, which is provided on the inside surface of the above-mentioned air charge part (110), and at least the volume of the above-mentioned buffer material (120) is maintained.

As shown in Figure 7c, the air charge part (110) can have a shape that encloses the entire surface of the outside side surface of the buffer material (120), that is, a cylindrical or tubular shape, and the buffer material (120) can be provided in contact with the inner surface of the above-mentioned tubular shape.

If the osculating device (100) is provided while adopting a tubular shape as the sectional shape of the air charge part (110) as mentioned above, even if the air in the air charge part (111) leaks out slightly from the buffer material (120) with a rectangular or circular shape that is provided on the inside surface of the above-mentioned air charge part (110), the entire volume of the air charge part (110) is not reduced by the shape of the buffer material (120) such as a rectangular or circular shape, and at least the volume of the above-mentioned buffer material (120) is maintained.

As the above-mentioned buffer material (120) of Figures 7a-7c, spongy material and/or an air cap can be used. The air cap prevents the impact of ordinary articles through the use of air injection spaces formed in vinyl, etc.

In the above-mentioned figures, only rectangular and circular shapes were shown as the shape of the buffer material (120); however, in addition to the above-mentioned shapes, buffer materials with other shapes that are positioned in the air charge part (110) and that can be closely attached to an airplane when osculating with the airplane can be used.

Next, the method that closely attaches the above-mentioned osculating device (100) to the gateway of an airplane by osculating with the airplane in a mobile boarding bridge equipped with the above-mentioned osculating device (100) will be explained.

When the airplane approaches the airport terminal, the tunnel is expanded by the driving means and extended to the entrance of the airplane, while its length is regulated. After the above-mentioned tunnel is extended to a fixed length, the tunnel is vertically moved by the lift column, and the cabin part is regulated so that its height is adjusted to the height of the entrance of the airplane. Then, the direction is regulated by the rotation of the cabin rotation part so that the directions of the airplane entrance and the entrance of the canopy (140) are aligned.

After the above-mentioned distance, height, and direction have been adjusted, as the fall-away part of the canopy (140) is expanded, the osculating device (100) provided at the end of the canopy (140) makes contact with the airplane body. Then, air is charged into the air charge part (110) of the above-mentioned osculating device (100) by an air compressor, etc. The above-mentioned charging of air can also be carried out before or after the distance, height, and direction are adjusted.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. An osculating device (100) for a mobile boarding bridge, comprising:
an air charge part (110) that is attachable to an end of a canopy (140) of the mobile boarding bridge and that is chargeable with air; and
a buffer material (120);
**characterized in that** the buffer material (120) is positioned in the air charge part (110) and maintains a volume of the osculating device (120), even if air is discharged from the air charge part (110).

2. The osculating device for a mobile boarding bridge of claim 1, wherein the air charge part (110) has a circular sectional shape and an inner surface of the air charge part (110) encloses an outer surfaces of the buffer material (120).

3. The osculating device for a mobile boarding bridge of claim 1, wherein the air charge part (110) has an annular shape and an inside ring-shaped surface of the air charge part (110) encloses an outer surface of the buffer material (120).

4. The osculating device for a mobile boarding bridge of claim 3, wherein the air charge part (110) encloses only part of an outside surface of the buffer material (120).

5. The osculating device for a mobile boarding bridge of any of the preceding claims, wherein the buffer material (120) comprises at least one of a spongy material or an air cap.

## Patentansprüche

1. Anschmiegevorrichtung (100) für eine mobile Fluggastbrücke mit
einem mit Luft befüllbaren Element (110), das am Ende eines Vordachs (140) der mobilen Fluggastbrücke anbringbar und mit Luft befüllbar ist; und
einem Puffermaterial (120);
**dadurch gekennzeichnet, dass** das Puffermaterial (120) in dem mit Luft befüllbaren Element (110) angeordnet ist, und selbst dann, wenn die Luft aus dem mit Luft befüllbaren Element (110) herausgelassen wird, ein Volumen der Anschmiegevorrichtung (100) aufrecht erhält.

2. Anschmiegevorrichtung (100) für eine mobile Fluggastbrücke nach Anspruch 1, wobei das mit Luft befüllbare Element (110) einen kreisförmigen Querschnitt hat, und eine innere Fläche des mit Luft befüllbaren Elements (100) eine äußere Fläche des Puffermaterials (120) umschließt.

3. Anschmiegevorrichtung (100) für eine mobile Fluggastbrücke nach Anspruch 1, wobei das mit Luft befüllbare Element (110) eine ringförmige Form hat, und eine innere, ringförmige Fläche des mit Luft befüllbaren Elements (110) eine äußere Fläche des Puffermaterials (120) umschließt.

4. Anschmiegevorrichtung (100) für eine mobile Fluggastbrücke nach Anspruch 3, wobei das mit Luft befüllbare Element (110) nur einen Teil einer äußeren Fläche des Puffermaterials (120) umschließt.

5. Anschmiegevorrichtung (100) für eine mobile Fluggastbrücke nach einem der vorangehenden Ansprüche, wobei das Puffermaterial (120) wenigstens eines von einem schwammförmigen Material und einer Lufthaube aufweist.

## Revendications

1. Dispositif osculateur (100) pour une passerelle d'embarquement mobile, comprenant :
une partie d'admission d'air (110) qui peut être attachée à une extrémité d'un auvent (140) de la passerelle d'embarquement mobile et qui peut être chargée en air ; et
un matériau tampon (120) ;
**caractérisé en ce que** le matériau tampon (120) est positionné dans la partie d'admission d'air (110) et maintient un volume du dispositif osculateur (120), même si de l'air est évacué de la partie d'admission d'air (110).

2. Dispositif osculateur pour une passerelle d'embarquement mobile selon la revendication 1, dans lequel la partie d'admission d'air (110) a une forme en coupe circulaire et une surface interne de la partie d'admission d'air (110) enferme une surface externe du matériau tampon (120).

3. Dispositif osculateur pour une passerelle d'embarquement mobile selon la revendication 1, dans lequel la partie d'admission d'air (110) a une forme annulaire et une surface intérieure en forme d'anneau de la partie d'admission d'air (110) enferme une surface externe du matériau tampon (120).

4. Dispositif osculateur pour une passerelle d'embarquement mobile selon la revendication 3, dans lequel la partie d'admission d'air (110) n'enferme qu'une partie d'une surface extérieure du matériau tampon (120).

5. Dispositif osculateur pour une passerelle d'embarquement mobile selon l'une quelconque des revendications précédentes, dans lequel le matériau tampon (120) comprend au moins l'un d'un matériau spongieux ou d'un coussin d'air.
